# FASCICULE DE BREVET EUROPEEN

(11) **EP 3 823 936 B1**
(45) Date de publication et mention de la délivrance du brevet: **08.11.2023**
(21) Numéro de dépôt: 19761912.5
(22) Date de dépôt: 17.07.2019
(51) Int. Cl.: C03C 17/38

(54) **VITRAGE CONTRÔLE SOLAIRE OU BAS ÉMISSIF COMPRENANT UNE COUCHE ORGANIQUE DE PROTECTION**
MIT EINER ORGANISCHEN SCHUTZSCHICHT VERSEHENE VERGLASUNG MIT NIEDRIGEM EMISSIONSVERMÖGEN ODER SONNENSCHUTZ
LOW-EMISSIVITY OR SOLAR CONTROL GLAZING COMPRISING AN ORGANIC PROTECTIVE LAYER

(30) Priorité: 18.07.2018 FR 1856649
(43) Date de publication de la demande: 26.05.2021
(73) Titulaire: Saint-Gobain Glass France, 92400 Courbevoie (FR)
(72) Inventeur: BRUNET, Marine, 75014 Paris (FR); DEVYS, Lucie, 75019 Paris (FR); HEURTEFEU, Bertrand, 93290 Tremblay-en-France (FR); POTIER, François, 75013 Paris (FR)
(74) Mandataire: Saint-Gobain Recherche
(86) Numéro de dépôt international: PCT/FR2019/051798
(87) Numéro de publication internationale: WO 2020/016527

(56) Documents cités:
- WO-A1-2018/051029
- US-A1- 2018 037 495

## Description

L'invention concerne un matériau comprenant un substrat transparent revêtu d'un revêtement fonctionnel pouvant agir sur le rayonnement solaire et/ou le rayonnement infrarouge. L'invention concerne également les vitrages comprenant ces matériaux ainsi que l'utilisation de tels matériaux pour fabriquer des vitrages.

Dans la suite de la description, le terme « fonctionnel » qualifiant « revêtement fonctionnel » signifie « pouvant agir sur le rayonnement solaire et/ou le rayonnement infrarouge ».

Ces revêtements fonctionnels sont utilisés dans des vitrages dits « de contrôle solaire » visant à diminuer la quantité d'énergie solaire entrante et/ou dans des vitrages dits « bas émissifs » visant à diminuer la quantité d'énergie dissipée vers l'extérieur d'un bâtiment ou d'un véhicule de par leurs propriétés de conduction électrique et de réflexion des rayonnements infrarouges (IR) avantageuses.

Les revêtements fonctionnels comprennent une ou plusieurs couches fonctionnelles. Ces couches fonctionnelles peuvent être à base d'oxyde conducteur ou à base de couches métalliques.

Les revêtements fonctionnels à base d'oxyde conducteur sont typiquement à base d'ITO (« Indium Tin Oxide »). Ces revêtements présentent une basse émissivité, une bonne durabilité chimique et une bonne résistance mécanique. Cependant, de tels revêtements fonctionnels sont relativement onéreux.

Les revêtements fonctionnels comprenant une ou plusieurs couches fonctionnelles métalliques à base d'argent (ci-après revêtement fonctionnel à base d'argent) sont nettement moins chers. Cependant, la résistance à la corrosion et la résistance mécanique de ces revêtements fonctionnels est souvent insuffisante. Cette faible résistance se traduit par l'apparition à court terme de défauts tels que des points de corrosion, des rayures, voire de l'arrachement total ou partiel du revêtement lors de son utilisation dans des conditions normales. Tous défauts ou rayures, qu'ils soient dus à la corrosion ou à des sollicitations mécaniques, sont susceptibles d'altérer non seulement l'esthétique du substrat revêtu mais également les performances optiques et énergétiques.

De plus, ces substrats revêtus de revêtements fonctionnels à base d'argent ne sont en général pas suffisamment résistants pour être utilisés dans des applications « ouvertes » où le revêtement est directement au contact d'un milieu non contrôlé tel que l'air ambiant. C'est pourquoi ces revêtements fonctionnels ne sont pas positionnés sur l'une des faces externes (intérieure ou extérieure) des vitrages. En effet, ils sont utilisés sous forme de vitrages multiples, doubles ou triples ou sous forme de vitrages feuilletés. Le revêtement fonctionnel est alors positionné sur l'une des faces internes, au contact d'un milieu étanche constitué du gaz de la lame intercalaire dans le cas d'un vitrage multiple ou au contact de l'intercalaire polymère dans le cas d'un vitrage feuilleté. Le revêtement fonctionnel est ainsi protégé de la corrosion et des rayures.

La limitation de l'utilisation des revêtements fonctionnels à base d'argent aux vitrages multiples ou feuilletés demeure un inconvénient important qui réduit leur intérêt.

Des solutions basées sur l'utilisation de couche protectrice ont été proposées pour permettre l'utilisation des revêtements fonctionnels à base d'argent dans des applications ouvertes. Cependant, la protection assurée par les couches supérieures de protection connues est en général insuffisante.

Parmi ces solutions, on trouve des couches de protection déposée par pulvérisation cathodique magnétron, par dépôt chimique en phase vapeur assisté par plasma (PECVD) ou bien encore par voie liquide.

La voie liquide est particulièrement intéressante car elle permet de déposer à pression atmosphérique, et donc à faible cout, une couche d'épaisseur variable (quelques centaines de nanomètres à une dizaine de microns).

La demande WO 2017/103465 décrit un vitrage comprenant au moins un substrat muni d'un revêtement fonctionnel réfléchissant le rayonnement infrarouge recouvert d'un film polymère protecteur en copolymère styrène-butadiène ayant une épaisseur inférieure à 10 micromètres. Ce film polymère permet d'améliorer la résistance chimique du revêtement fonctionnel tout en préservant les performances optiques, colorimétriques et énergétiques du vitrage. Dans cette demande, la résistance mécanique n'est pas mentionnée.

Les demandes WO 2015/019022 et WO 2018/051029 divulguent un substrat muni d'un revêtement fonctionnel réfléchissant le rayonnement infrarouge recouvert d'une couche de protection temporaire destinée à être éliminée suite à un traitement thermique de type trempe. Ces couches de protection temporaire sont des couches polymériques organiques à base d'acrylate de 10 à 20 µm d'épaisseur. Ces couches de protection temporaire épaisses permettent de prévenir toute apparition de rayures dans le revêtement fonctionnel qu'elles protègent. En revanche, ces couches ne présentent pas en soi une bonne résistance aux rayures. Dans la mesure où ces couches sont éliminées suite au traitement thermique, il est indifférent qu'elles soient sensibles aux rayures.

Dans WO 2018/051029, il est spécifié que l'émissivité augmente fortement lorsque la couche de polymère est ajoutée sur le revêtement fonctionnel.

Les couches de protection temporaires décrites dans les documents WO 2015/019022 et WO 2018/051029 ne peuvent pas être utilisées de façon permanente dans un vitrage type bas émissif, d'une part du fait de leur mauvaise résistance aux rayures mais également en raison de leur épaisseur et de leur inhomogénéité. L'esthétique n'est pas acceptable mais surtout l'augmentation de l'émissivité beaucoup trop US-2018037495 concerne un procédé de revêtement par nanoimpression utilisant une composition réticulée par UV. Ces couches polymérisables sont destinées à former des structures telles que des cônes par nanoindentation

Les propriétés de réflexion des infrarouges sont directement fonction de l'émissivité du vitrage. Plus l'émissivité est faible, plus le vitrage à la capacité de ne pas laisser s'échapper la chaleur qu'il reçoit. Une augmentation trop importante de l'émissivité rend donc le vitrage impropre à une utilisation comme vitrage isolant.

La couche de protection ne doit pas perturber sensiblement les propriétés optiques et énergétiques initiales du substrat comprenant un revêtement fonctionnel.

Il existe donc un besoin de développer une solution permettant de protéger plus efficacement les substrats revêtus de revêtement fonctionnel, tout particulièrement ceux comprenant des couches fonctionnelles à base d'argent, contre la corrosion et les rayures, tout en maintenant l'émissivité suffisamment faible pour utiliser ces substrats dans des vitrages isolants.

L'objectif de l'invention est de mettre au point des matériaux comprenant un revêtement fonctionnel notamment à base d'argent pouvant être utilisés sur les faces externes, c'est à dire en simple vitrage ou dans le cas d'un vitrage multiple ou feuilleté sur une des faces au contact de l'air ambiant.

Le demandeur a découvert de manière surprenante que l'utilisation d'une couche de protection polymérique à base d'acrylate comprenant un composé comprenant un groupe polyorganosiloxane et au moins deux fonctions (méth)acrylates permet d'atteindre ces objectifs. Cette couche de protection peut être utilisée de manière permanente car :
- elle est en soi non sensibles aux rayures et à l'abrasion,
- elle présente une bonne résistance chimique et hydrolytique,
- elle confère au substrat une protection suffisante pour permettre l'utilisation du revêtement fonctionnel sur l'une des faces externes d'un vitrage, et
- l'augmentation de l'émissivité est suffisamment faible pour conserver les propriétés de vitrage isolant.

L'invention concerne un matériau comprenant un substrat revêtu d'un revêtement fonctionnel et d'une couche de protection organique permanente déposée sur au moins une partie du revêtement fonctionnel, caractérisé en ce que la couche de protection organique est obtenue par réticulation d'une composition polymérisable comprenant :
a) des composés (méth)acrylates ne comprenant pas de groupe polyorganosiloxane,
b) au moins un composé comprenant un groupe polyorganosiloxane et au moins deux fonctions (méth)acrylates et
c) éventuellement un amorceur de polymérisation.

On entend par (méth)acrylate, un acrylate ou un méthacrylate.

On entend par fonctions (méth)acrylate une fonction acrylate (CH2=CH-COO-) ou une fonction méthacrylate (CH2=CH(CH3)-COO-).

La couche de protection organique est une couche polymérique organique.

La couche de protection organique est essentiellement de nature organique. Elle est obtenue à partir d'une composition polymérisable. Elle résulte de la réticulation des composés organiques polymérisables présents dans la composition polymérisable.

Les composés (méth)acrylates a) ne comprenant pas de groupe polyorganosiloxane ayant réagis entre eux représentent en masse par rapport à la masse totale de la couche de protection organique par ordre de préférence croissant :
- au moins 50 %, au moins 60 %, au moins 70 %, au moins 80 %, au moins 90 %, au moins 95 %, et/ou
- au plus 99 %, au plus 98 %, au plus 97 %, au plus 96 %, au plus 95 %.

Le composé b) comprenant un groupe polyorganosiloxane correspond à un composé comprenant des groupes polyorganosiloxanes et ayant au moins deux fonctions (méth)acrylates.

Ces composés b) présentent une masse moléculaire comprise entre 500 à 10000 g/mol. Avantageusement, les composés b) présentent une masse moléculaire, par ordre de préférence croissant, comprise entre de 500 à 15000, comprise entre 1000 et 10000, comprise entre 3000 et 7000 g/mol. Les masses moléculaires peuvent être déterminées par chromatographie à perméation de gel.

Le composé comprenant un groupe polyorganosiloxane représente, par ordre de préférence croissant, 0,05 à 5%, 0,1 à 4 %, 0,2 à 3%, 0,3 à 2%, 0,3 à 1,5 % en masse de la masse totale de la couche de protection organique.

Le composé comprenant un groupe polyorganosiloxane représente, par ordre de préférence croissant, 0,05 à 5%, 0,1 à 4 %, 0,2 à 3%, 0,3 à 2%, 0, 3 à 1,5 % en masse de la masse totale des composés a), b) et éventuellement c).

Le groupe polyorganosiloxane du composé comprenant un groupe polyorganosiloxane est constitué de 2 à 1000 unités organosiloxane. Ce groupe polyorganosiloxane peut faire partie de la chaîne principale du composé ou faire partie d'une chaine latérale.

Le composé comprenant un groupe polyorganosiloxane peut être choisi parmi les polyorganosiloxanes modifiés comportant une pluralité de fonctions (méth)acrylates. Ce type de composé correspond à un composé ayant au moins deux fonctions (méth)acrylates introduites dans n'importe quelle position d'une chaine (ou squelette) polyorganosiloxane, notamment sur une chaîne latérale ou en extrémité de la chaine principale. Dans ce cas, le composé comprenant un groupe polyorganosiloxane représente, par ordre de préférence croissant, 0,05 à 1,5 %, 0,1 à 1 %, 0,2 à 0,7 %, 0,4 à 0,6 % en masse de la masse totale des composés a), b) et c) ou de la masse totale de la couche de protection organique. Ce type de composé est par exemple commercialisé sous la dénomination Byk 3505.

Le composé comprenant un groupe polyorganosiloxane peut être choisi parmi les poly(méth)acrylates modifiés comportant des groupes polyorganosiloxanes et moins deux fonctions (méth)acrylates. Ce type de composé est par exemple commercialisé par la société Sartomer sous la dénomination CN9800 (« oligomère silicone acrylate aliphatique difonctionnel »). Dans ce cas, le composé comprenant un groupe polyorganosiloxane représente, par ordre de préférence croissant 0,2 à 4 %, 0,4 à 3%, 0,6 à 2%, 0,9 à 1,6 % en masse, de la masse totale des composés a), b) et c) ou de la masse totale de la couche de protection organique.

On entend par « composés (méth)acrylate », les esters de l'acide acrylique ou méthacrylique comportant au moins une fonction (méth)acrylate. Les composés (méth)acrylate ne comprenant pas de groupe polyorganosiloxane a) utilisés selon l'invention peuvent être choisis parmi les (méth)acrylates monofonctionnels et polyfonctionnels tels que les (méth)acrylates mono-, di-, tri-, poly-fonctionnels. Ces esters peuvent être des monomères, des oligomères, des pré-polymères ou des polymères. Ces composés (méth)acrylate, lorsqu'ils sont soumis aux conditions de polymérisation, donnent un réseau polymère doté d'une structure solide.

Les composés (méth)acrylates a) présentent une masse moléculaire ou masse moléculaire moyenne (ci-après masse moléculaire) comprise entre 150 à 10000 g/mol.

De préférence, les composés (méth)acrylates a) comprennent des composés (méth)acrylates à fonctionnalité élevée. Ces composés à fonctionnalité élevée comportent, par ordre de préférence croissant, au moins 4, au moins 5, au moins 6 fonctions (méth)acrylate.

Les composés (méth)acrylates a) comprenant des composés (méth)acrylates à fonctionnalité élevée présentent une masse moléculaire, par ordre de préférence croissant, comprise entre de 500 à 10000, comprise entre 800 et 5000, comprise entre 1000 et 2000 g/mol.

De manière encore plus préférée, les composés (méth)acrylates à fonctionnalité élevée ayant réagis représentent, en masse par rapport à la masse totale de la couche de protection organique, par ordre de préférence croissant, au moins 50 %, au moins 60 %, au moins 70 %, au moins 80 %, au moins 90 %, au moins 94%.

Selon un mode de réalisation avantageux, les composés (méth)acrylates a) à fonctionnalité élevée comporte au moins 4 fonctions (méth)acrylate. Ils représentent, en masse par rapport à la masse totale de la couche de protection organique, par ordre de préférence croissant, au moins 50 %, au moins 60 %, au moins 65%, au moins 70 %, au moins 80 %, au moins 90 %, au moins 94%.

Selon un autre mode de réalisation avantageux, les composés (méth)acrylates à fonctionnalité élevée ayant au moins 5 fonctions (méth)acrylates représentent, en masse par rapport à la masse totale de la couche de protection organique, par ordre de préférence croissant, au moins 50 %, au moins 60 %, au moins 70 %, au moins 80 %, au moins 90%, au moins 94%

Selon un autre mode de réalisation avantageux, les composés (méth)acrylates à fonctionnalité élevée ayant au moins 6 fonctions (méth)acrylates représentent, en masse par rapport à la masse totale de la couche de protection organique, par ordre de préférence croissant, au moins 50 %, au moins 60 %, au moins 70 %, au moins 80 %, au moins 90%, au moins 94%.

Avantageusement, les composés (méth)acrylates a) comprennent des composés (méth)acrylates à fonctionnalité élevée comportant au moins 6 fonctions (méth)acrylate et une masse moléculaire allant de 1000 à 2000 g/mol. A titre d'exemple, on peut citer le produit CN9010EU commercialisé par la société Sartomer qui est un prépolymère uréthane-acrylate aliphatique comportant 6 fonctions (méth)acrylates et une masse moléculaire de 1450 g/mol.

Selon des modes de réalisations avantageux de l'invention, la composition polymérisable présente les caractéristiques suivantes :
- elle comprend au moins un amorceur (ou initiateur) de polymérisation, de préférence un photoamorceur,
- l'amorceur de polymérisation représente 0,1 à 20 %, ou 1 à 15 %, de préférence 3 à 10 % et mieux 4 à 8 % en masse de la masse totale des composés (méth)acrylates,
- les composés (méth)acrylates sont choisis parmi des monomères, des oligomères, des prépolymères ou des polymères comprenant au moins une fonction (méth)acrylate,
- les composés (méth)acrylates sont choisis parmi les esters de l'acide acrylique ou méthacrylique comportant au moins deux fonctions (méth)acrylate,
- les composés (méth)acrylates a) comprennent éventuellement au moins un oligomère uréthane-acrylique aliphatique,
- les composés (méth)acrylates a) comprennent au moins un monomère ou oligomère comportant, par ordre de préférence croissant, au moins 2, au moins 3, au moins 4, au moins 5, au moins 6 fonctions (méth)acrylate,
- la composition polymérisable comprend en outre au moins un additif choisi parmi les promoteurs d'adhésion, les plastifiants, les absorbeurs, les agents de séparation, les stabilisants à la chaleur et/ou à la lumière, les agents épaississants ou les modificateurs de surface,
- la somme de tous les additifs est comprise entre 0 et 10 %, de préférence 0 et 5 %, voire 0,5 à 2,5 % en masse par rapport à la masse totale de la couche de protection organique.

Selon l'invention, les amorceurs de polymérisation et les composés b) comprenant un groupe polyorganosiloxane ne sont pas considérés comme des additifs.

Les composés a), b) et c) ayant réagis entre eux représentent, par ordre de préférence croissant, au moins 80 %, au moins 90 %, au moins 95 %, au moins 98 %, en masse de la couche de protection organique.

La couche de protection organique est continue. Elle présente une épaisseur, par ordre de préférence croissant :
- inférieure à 5 µm, inférieure à 4 µm, inférieure à 3,5 µm, et/ou
- supérieure à 0,5 µm, supérieure à 1 µm, supérieure à 2 µm.
La couche de protection organique ne provoque pas une diminution significative de la transparence du substrat revêtu du revêtement fonctionnel. En particulier, la couche de protection organique provoque une diminution de la TL inférieure à 25%, de préférence inférieure à 20%, et de manière encore préférée inférieure à 15%.

La couche de protection organique selon l'invention est de préférence appliquée en sortie de la ligne de fabrication des substrats portant des revêtements fonctionnels. L'étape de dépôt de la couche de protection organique peut être facilement intégrée dans le procédé de fabrication du substrat portant le revêtement fonctionnel.

La composition polymérisable présente, grâce au choix judicieux des composés (méth)acrylates et de solvant, une viscosité adaptée pour permettre d'obtenir facilement une couche de protection organique d'épaisseur supérieure ou égale à 1 µm. A titre de solvant pouvant être utilisé, on peut citer l'éthylméthylcétone (butanone), l'alcool isopropylique, l'acétate d'éthyle ou de butyle.

La nature chimique, le degré de réticulation, la densité de la couche de protection organique concourent à l'obtention d'une protection efficace contre l'abrasion, l'apparition de rayures et la corrosion. Ces propriétés de protection sont obtenues pour des épaisseurs inférieures à 9 micromètres, de préférence inférieures à 5 µm.

La couche de protection organique est de préférence déposée et réticulée grâce des moyens adaptés directement intégrable en sortie de l'enceinte de dépôt du revêtement fonctionnel. Cela permet de prévenir toute contamination des substrats éventuellement revêtus et de fabriquer en continu des articles protégés.

La composition polymérisable peut donc être appliquée à température ambiante par tout moyen connu et notamment par enduction au rouleau, par aspersion, par trempage, par enduction au rideau, ou par pistoletage.

Cette couche de protection organique non soluble dans l'eau permet d'obtenir une protection efficace même lors de l'étape de lavage.

Bien que l'invention convienne tout particulièrement pour la protection de substrats portant des revêtements fonctionnels mécaniquement faibles, la solution de l'invention peut s'appliquer à la protection de substrats portant tous types de revêtement fonctionnel.

Le revêtement fonctionnel comprend au moins une couche fonctionnelle. La couche fonctionnelle est de préférence une couche pouvant agir sur le rayonnement solaire et/ou le rayonnement infrarouge de grande longueur d'onde. Ces couches fonctionnelles sont par exemple des couches fonctionnelles métalliques à base d'argent ou d'alliage métallique contenant de l'argent. Elles sont déposées entre des revêtements diélectriques qui comprennent généralement plusieurs couches diélectriques permettant d'ajuster les propriétés optiques de l'empilement. Ces couches diélectriques permettent en outre de protéger la couche d'argent des agressions chimiques ou mécaniques.

Le revêtement fonctionnel comprend donc avantageusement au moins une couche métallique fonctionnelle à base d'argent, au moins deux revêtements diélectriques, chaque revêtement diélectrique comportant au moins une couche diélectrique, de manière à ce que chaque couche métallique fonctionnelle soit disposée entre deux revêtements diélectriques.

Le substrat peut comprendre un revêtement fonctionnel comprenant un empilement de couches minces comportant successivement à partir du substrat une alternance de n couches métalliques fonctionnelles à base d'argent ou d'alliage métallique contenant de l'argent, et de (n+1) revêtements diélectriques, chaque revêtement diélectrique comportant au moins une couche diélectrique, de manière à ce que chaque couche métallique fonctionnelle soit disposée entre deux revêtements diélectriques. De préférence, n vaut 1, 2, 3 ou 4. De façon encore plus préférée, n est supérieur à 1 notamment n vaut 2 ou 3.

Le substrat peut comprendre successivement à partir du substrat une alternance de deux couches métalliques fonctionnelles, notamment de couches fonctionnelles à base d'argent ou d'alliage métallique contenant de l'argent, et de trois revêtements diélectriques, chaque revêtement diélectrique comportant au moins une couche diélectrique, de manière à ce que chaque couche métallique fonctionnelle soit disposée entre deux revêtements diélectriques.

Le substrat peut également comprendre un revêtement fonctionnel comprenant un empilement de couches minces comportant successivement à partir du substrat une alternance de trois couches métalliques fonctionnelles à base d'argent ou d'alliage métallique contenant de l'argent, et de 4 revêtements diélectriques, chaque revêtement diélectrique comportant au moins une couche diélectrique, de manière à ce que chaque couche métallique fonctionnelle soit disposée entre deux revêtements diélectriques.

L'épaisseur du revêtement fonctionnel est :
- supérieure à 100 nm, de préférence supérieure à 150 nm, et/ou
- inférieure à 300 nm, de préférence inférieure à 250 nm.

Selon un mode de réalisation particulièrement avantageux de l'invention, le revêtement fonctionnel comprend une supérieure couche de protection non organique choisie parmi les nitrures, oxydes ou oxy-nitrures de titane et/ou de zirconium. La couche supérieure du revêtement fonctionnel est la couche la plus éloignée du substrat et/ou la couche en contact direct avec la couche de protection organique.

L'épaisseur de ces couches supérieures de protection non organique est préférentiellement comprise entre 1 et 20 nm et mieux comprise entre 1 et 5 nm.

La couche supérieure du revêtement fonctionnel, notamment lorsqu'elle est à base d'oxyde de titane, est importante car elle pour favorise l'adhésion entre les couche inorganique du revêtement fonctionnel et la couche de protection organique.

Le revêtement fonctionnel peut être déposé par tout moyen connu tel que par pulvérisation cathodique assistée par un champ magnétique, par évaporation thermique, par CVD ou PECVD, par pyrolyse, par dépôt par voie chimique, par voie de type sol-gel ou dépôt de couches inorganiques par voie humide.

Le revêtement fonctionnel est de préférence déposé par pulvérisation cathodique assistée par un champ magnétique. Selon ce mode de réalisation avantageux, toutes les couches du revêtement fonctionnel sont déposées par pulvérisation cathodique assistée par un champ magnétique. La couche de protection organique est avantageusement directement au contact du revêtement fonctionnel.

Le substrat est de préférence un substrat en verre.

Le substrat en verre peut être plat ou bombé, incolore et/ou teinté. L'épaisseur du substrat est de préférence comprise entre 1 et 19 mm, plus particulièrement entre 2 et 10 mm, voire entre 3 et 6 mm.

La couche de protection organique peut être déposée :
- sur chacune des surfaces principales du substrat, et/ou
- sur au moins un bord du substrat, et/ou
- sur chacun des bords du substrat.

L'invention concerne également le procédé d'obtention d'un matériau selon l'invention. Le procédé de l'invention comprend une ou plusieurs des caractéristiques suivantes :
- le revêtement fonctionnel est déposé par pulvérisation cathodique assistée par un champ magnétique et la couche de protection organique est directement au contact du revêtement fonctionnel,
- la composition polymérisable est appliquée sur le revêtement fonctionnel,
- la couche de protection organique est obtenue par réticulation UV.

De préférence, le revêtement fonctionnel est déposé par pulvérisation cathodique assistée par un champ magnétique et en ce que la couche de protection organique permanente est directement au contact du revêtement fonctionnel.

La couche de protection organique peut être formée immédiatement après l'étape de dépôt du revêtement fonctionnel. Selon l'invention, on considère que la couche de protection organique peut être formée « immédiatement après », lorsque la couche de protection organique peut être formée moins de 10 minutes, de préférence moins de 5 minutes et mieux moins de 1 minutes après l'étape de dépôt du revêtement fonctionnel.

L'invention concerne également un vitrage comprenant un matériau selon l'invention. Le vitrage peut être monté sur un véhicule ou un bâtiment.

Un vitrage selon l'invention est plus particulièrement adapté pour équiper des bâtiments ou des véhicules notamment comme vitre latérale, toit ouvrant ou encore lunette arrière. Il est également apte à être utilisé comme vitrine ou porte de réfrigérateur à fonction antibuée (anticondensation), notamment pour équiper les présentoirs des produits congelés en supermarché.

Selon un mode de réalisation, le revêtement fonctionnel protégé par la couche de protection organique se trouve directement au contact de l'air ambiant.

Le vitrage peut être un vitrage simple comprenant un matériau selon l'invention, c'est à dire, un substrat revêtu d'un revêtement fonctionnel et d'une couche de protection organique permanente déposée sur au moins une partie du revêtement fonctionnel, le revêtement fonctionnel et la couche de protection organique permanente sont disposés sur une face externe du vitrage.

Le vitrage peut être un vitrage multiple, comprenant un matériau selon l'invention et au moins un substrat additionnel, le revêtement fonctionnel et la couche de protection organique permanente sont disposés sur une face externe du vitrage.

Le vitrage peut être un vitrage feuilleté, comprenant un matériau selon l'invention et au moins un substrat additionnel, le revêtement fonctionnel et la couche de protection organique permanente sont disposés sur une face externe du vitrage.

L'invention concerne également un véhicule ou un bâtiment comprenant un vitrage selon l'invention.

Les exemples suivants illustrent l'invention.

### Exemples

### I. Substrat et revêtement fonctionnel

Un revêtement fonctionnel défini ci-après est déposé sur des substrats en verre sodo-calcique clair d'une épaisseur de 4 mm.

Pour ces exemples, les conditions de dépôt des couches déposées par pulvérisation (pulvérisation dite « cathodique magnétron ») sont résumées dans le tableau 1 ci-dessous

| Tab.1 | Cibles employées | Pression dépôt | Gaz |
|---|---|---|---|
| SnZnOx | Sn:Zn (60:40% en pds) | 1,5*10⁻³ mbar | Ar 39 % - O2 61 % |
| ZnO:Al | Zn:Al (98:2 % en pds) | 1,8.10⁻³ mbar | Ar /(Ar + O2) à 63 % |
| NiCr | Ni:Cr (80:20 % at.) | 1-5*10⁻³ mbar | Ar à 100 % |
| Ag | Ag | 2-3*10⁻³ mbar | Ar à 100 % |
| TiO₂ | TiOx | 1,5*10⁻³ mbar | Ar 88 % - O₂ 12 % |

| | | | |
|---|---|---|---|
| at. : atomique ; pds : poids ; * : à 550 nm. | | | |

Le tableau ci-dessous liste les matériaux et les épaisseurs physiques en nanomètres (sauf autres indications) de chaque couche ou revêtement qui constitue l'empilement en fonction de leurs positions vis-à-vis du substrat porteur de l'empilement.

| | Vitrage | | |
|---|---|---|---|
| Couche de protection supérieure | | TiOx | 2,5 |
| Revêtement diélectrique | | SnZnOx | 30 |
| | | ZnO:Al | 6 |
| Couche blocage OB | | NiCr | 0,4 |
| Couche fonctionnelle | | Ag | 12 |
| Couche blocage UB | | NiCr | 0,1 |
| Revêtement diélectrique | | ZnO:Al | 6 |
| | | SnZnOx | 30 |
| Substrat (mm) | | verre | 4 |

### II. Couche de protection organique

### 1. Matières premières

Des compositions polymérisables ont été préparées. Elles comprennent des composés (méth)acrylates, des composés comprenant un groupe polyorganosiloxane, des amorceurs de polymérisation et éventuellement des additifs. Les différents constituants et additifs sont mélangés par agitation mécanique.

### a) Monomères et oligomères (méth)acrylates

Ces composés (méth)acrylate comprennent les oligomères et monomères comprenant au moins une fonction acrylate. Les composés suivants commercialisés par la société Sartomer ont été utilisés :
- CN9276 : oligomère uréthane-acrylate aliphatique tétra-fonctionnel (ci-après oligomère acrylate 4 fonctions) ayant une masse moléculaire de 1000 g/mol,
- SR351 : triméthylolpropane triacrylate, monomère acrylate tri-fonctionnel ayant une masse moléculaire de 296 g/mol,
- SR833S : tricyclodécane diméthanol diacrylate, monomère acrylate di-fonctionnel ayant une masse moléculaire de 304 g/mol,
- CN9010EU : oligomère uréthane-acrylate aliphatique hexa-fonctionnel (ci-après oligomère acrylate 6 fonctions) ayant une masse moléculaire de 1450 g/mol.

### b) Composés comprenant un groupe polyorganosiloxane

Un polyorganosiloxane modifié comportant une pluralité de (méth)acrylates ayant une masse moléculaire de 6500 g/mol commercialisé sous la dénomination Byk 3505 a été utilisé.

Un poly(méth)acrylate modifié comportant des groupes polyorganosiloxanes ayant un masse moléculaire de 3700 g/mol et une densité de double liaison de 0,54 mmol/g, commercialisé par la société Sartomer sous la dénomination CN9800 (« oligomère silicone acrylate aliphatique difonctionnel ») a été utilisé.

### c) Photoamorceur

L'amorceur peut être choisi parmi les photo-amorceurs commercialisés par BASF sous la dénomination Irgacure^{®} tel que l'Iragure 500, par Lambson sous la dénomination Speedcure 500 ou par Lamberti sous la dénomination Esacure HB.

### d) Additifs

Un promoteur d'adhésion tel qu'un monomère triacrylate du type acide comme le SR9051 peut être utilisé.

### e) Solvants

Le solvant utilisé est l'éthylméthylcétone (butanone). Les quantités de solvant sont choisies de façon à obtenir, après élimination du ou des solvants, l'épaisseur désirée pour la couche de protection.

### 2. Compositions polymérisables

Les compositions testées sont définies dans tableau ci-dessous en parties en masse.

Les compositions polymérisables sont liquides. Elles sont filtrées à 0,2 µm pour éviter les agrégats. Leurs extraits secs sont adaptés par ajout de solvant en fonction des épaisseurs de couche de protection recherchées.

| Compositions | A | B | C | D |
|---|---|---|---|---|
| a) Oligomère acrylate 4 fonctions | 57 | 56,7 | - | 56,1 |
| a) di-fonctionnel acrylate | 19 | 18,9 | - | 18,7 |
| a) tri-fonctionnel acrylate | 18,8 | 18,7 | - | 18,5 |
| a) Oligomère acrylate 6 fonctions | - | - | 94 | - |
| c) Initiateur UV | 5 | 5 | 5 | 5 |
| b) Byk 3505 | - | 0,5 | 0,5 | - |
| b) CN9800 | - | - | - | 1,5 |
| d) Promoteur d'adhésion | 0,2 | 0,2 | 0,5 | 0,2 |
| Total de matière sèche | 100 | 100 | 100 | 100 |
| Butanone : Qsp extrait sec 30 à 100 % | - | - | - | - |
| % en masse par rapport à somme de a) b) c) et d) de monomères au moins 4 fonctions acrylate | 60 | 60 | 100 | 60 |
| % en masse par rapport à somme de a) b) c) et d) de monomères au moins 6 fonctions acrylate | 0 | 0 | 100 | 0 |

| | | | | |
|---|---|---|---|---|
| Qsp : Quantité suffisante pour. | | | | |

Les compositions sont définies en pourcentage en masse.

Les compositions sont appliquées sur les substrats en verre par spin coating ou avec une barre de Meyer.

Les couches durcies par irradiation UV sont réticulées par un rayonnement UV fourni par une lampe à mercure de puissance (100 %, 10 m/min).

### 3. Préparation des matériaux testés

Le tableau ci-dessous liste pour chaque matériau comprenant un substrat revêtu d'un revêtement fonctionnel :
- la présence ou l'absence d'une couche de protection organique,
- la composition polymérisable utilisée,
- l'extrait sec,
- l'épaisseur de la couche de protection organique.

| **Matériaux** | **1** | **2** | **3** | **4** | **12** |
|---|---|---|---|---|---|
| Comp. polymérisable | Non | A | A | B | D |
| Extrait sec (%) | 0 | 85 - 100 | 30-40 | 30-40 | 30-40 |
| Epaisseur (µm) | 0 | 15 | 3-4 | 3-4 | 3-4 |

| **Matériaux** | **5** | **6** | **7** | **8** | **9** | **10** | **11** |
|---|---|---|---|---|---|---|---|
| Comp. polymérisable | C | C | C | C | C | C | C |
| Extrait sec (%) | 2 | 5 | 10 | 20 | 30 | 30-40 | 100 |
| Epaisseur (µm) | 0,15 | 0,34 | 0,64 | 1,4 | 2,6 | 3-4 | ≈15 |

### III. Caractérisation

### 1. Description des tests

Des essais pour évaluer la résistance de l'empilement de couches minces au vieillissement climatique et à l'abrasion ont été réalisés et notamment :
- le test de résistance au brouillard salin neutre selon la norme EN 1096 (Annexe D de la norme) appelé Test BSN,
- le test de résistance haute humidité PV1200,
- le test PCT « pressure cooker test »,
- le test Erichsen à la pointe (EST),
- le test small side-lite (SSL).

Le test de résistance au brouillard salin neutre consiste à soumettre un échantillon à 40 °C, à 100% HR, pendant 96 heures.

Le test PCT consiste à soumettre un échantillon à 120° C pendant 12h à une pression de 1,2 bar pression.

Le test PV1200 consiste à soumettre un échantillon pendant 20 cycles, à 80 % d'humidité relative, aux cycles :
- (-40) °C pendant 4 heures, puis
- 80°C pendant 4 heures.

Le test Erichsen consiste à reporter la valeur de la force nécessaire, en Newton, pour réaliser une rayure sur la dernière couche (pointe de Van Laar de 1mm de rayon de courbure, bille d'acier). Le test se fait par pas de 0,5 N, en commençant par 0,5N. Selon l'invention, le test est validé si l'apparition de la rayure se fait pour une force supérieure ou égale à 2 N.

Le test « small side-lite » consite à frotter sur un échantillon de matériau, coté revêtement fonctionnel, un joint de portière de voiture de 4 cm mis en place sur un controleur de lavabilité et d'abrasion (Elcometer 1720) en appliquant un force de contact de 4 N pendant 10 000 cycles.

L'émissivité a été calculée selon les critères définis dans la norme internationale NF EN 12898 : 2001. Dans le cadre des exemples exposés ci-après, on considère qu'une émissivité jusqu'à 30 % est satisfaisante et qu'au-delà le matériau ne peut plus être utilisé de manière satisfaisante comme vitrage isolant.

### 2. Résultats

Les résultats sont reportés dans les tableaux ci-dessous avec les indications :
- OK : lorsque le matériau à satisfait au test,
- NOK : lorsque le matériau n'a pas satisfait au test.

| Mat. | Emissivité % | Résistance Chimique | | | Résistance Mécanique | |
|---|---|---|---|---|---|---|
| | | BSN | PCT | PV1200 | EST* | SSL |
| 1 | 3 - 4 : OK | NOK | NOK | OK | 0,5 N - NOK* | NOK |
| 2 | 81 : NOK | OK | OK | OK | 2-2,5N-OK | / |
| 3 | 22 - 30 : OK | / | / | / | 0,5 - 1 N - NOK | / |
| 4 | 25 - 30: OK | OK | OK | OK | 2 N - OK | NOK |
| 10 | 25 - 30: OK | OK | OK | OK | ≥ 4 N - OK | OK |
| 12 | 25 - 30: OK | / | / | / | 2N-OK | / |

| | | | | | | |
|---|---|---|---|---|---|---|
| EST* : force en N à partir de laquelle les rayures apparaissent. | | | | | | |

| Matériau | Ep. µm | TL % | Emissivité % | EST N |
|---|---|---|---|---|
| 1 | 0 | 83,1 | 3,52 | <0,5 |
| 5 | 0,15 | 72,0 | 3,44 | <0,5 |
| 6 | 0,34 | 71,7 | 3,79 | 2 |
| 7 | 0,64 | 75,7 | 5,58 | 4 |
| 8 | 1,4 | 76,2 | 18,35 | 7 |
| 9 | 2,6 | 76,4 | 24,85 | 8 |
| 10 | 3-4 | - | 25-30 | 8 |
| 11 | 15 | - | > 80 | > 8 |

| | | | | |
|---|---|---|---|---|
| EST* : force en N à partir de laquelle les rayures apparaissent. | | | | |

### 3. Conclusions

Un revêtement fonctionnel non protégé par une couche de protection organique (Matériau 1) présent une durabilité chimique limitée. Il ne satisfait ni aux tests de résistance chimique BSN et PCT, ni aux tests de résistance mécaniques EST et SSL.

L'ajout d'une couche de protection organique épaisse (Matériau 2) permet d'améliorer la durabilité chimique. Elle permet d'améliorer la résistance mécanique mais pas suffisamment. La couche de protection est raillée rendant l'esthétique du matériau inacceptable. Enfin, l'absorption dans l'Infra-rouge d'une telle couche est beaucoup trop élevée. L'émissivité obtenue n'est pas satisfaisante. Le matériau comprenant cette couche de protection ne peut pas être utilisé de manière satisfaisante comme vitrage isolant.

L'ajout d'une couche fine de protection organique (Matériau 3) permet de conserver une émissivité suffisamment faible (<30%). Toutefois, la résistance mécanique n'est pas améliorée.

Le matériau 4 comprenant une couche de protection organique obtenue à partir d'une composition polymérisable comprenant un composé comprenant un groupe polyorganosiloxane présente une résistance mécanique satisfaisante tout en conservant une émissivité suffisamment faible (<30%).

Les exemples 5 à 11 montrent que la couche de protection de l'invention permet avec des épaisseurs fines, notamment comprise entre 0,34 et 10 µm d'obtenir à la fois une émissivité et une protection mécanique satisfaisante.

La diminution de la transmission lumineuse (TL) est très réduite. Dans ces exemples 5 à 9, la couche de protection organique ne fait perdre que de 7 à 11 % de TL.

Enfin, ces matériaux 5 à 11 comprenant une couche de protection organique fine obtenue à partir d'une composition polymérisable comprenant à la fois un composé comprenant un groupe polyorganosiloxane et une proportion élevée de composés (méth)acrylate à fonctionnalité élevée permet d'améliorer davantage la résistance mécanique que les matériaux obtenus à partir d'une composition ne comprenant pas une proportion élevée de composés (méth)acrylate à fonctionnalité élevée.

## Revendications

1. Matériau comprenant un substrat revêtu d'un revêtement fonctionnel et d'une couche de protection organique permanente déposée sur au moins une partie du revêtement fonctionnel, **caractérisé en ce que** la couche de protection organique est obtenue par réticulation d'une composition polymérisable comprenant :
a) des composés (méth)acrylates ne comprenant pas de groupe polyorganosiloxane,
b) au moins un composé comprenant un groupe polyorganosiloxane et au moins deux fonctions (méth)acrylates et
c) éventuellement un amorceur de polymérisation.

2. Matériau selon la revendication 1, **caractérisé en ce que** les composés (méth)acrylates a) ne comprenant pas de groupe polyorganosiloxane ayant réagis entre eux représentent en masse par rapport à la masse totale de la couche de protection organique par ordre de préférence croissant :
- au moins 50 %, et/ou
- au plus 99 %.

3. Matériau selon l'une quelconque des revendications précédentes, **caractérisé en ce que** le composé comprenant un groupe polyorganosiloxane représente 0,05 à 5% en masse de la masse totale de la couche de protection organique.

4. Matériau selon l'une quelconque des revendications précédentes, **caractérisé en ce que** le composé comprenant un groupe polyorganosiloxane est choisi parmi :
- les polyorganosiloxanes modifiés comportant une pluralité de fonctions (méth)acrylates,
- les poly(méth)acrylates modifiés comportant des groupes polyorganosiloxanes et au moins deux fonctions (méth)acrylates.

5. Matériau selon l'une quelconque des revendications précédentes, **caractérisé en ce que** les composés a), b) et c) ayant réagis entre eux représentent au moins 80 % en masse de la couche de protection organique.

6. Matériau selon l'une quelconque des revendications précédentes, **caractérisé en ce que** la couche de protection organique a une épaisseur, par ordre de préférence croissant :
- inférieure à 5 µm, et/ou
- supérieure à 0,5 µm.

7. Matériau selon l'une quelconque des revendications précédentes, **caractérisé en ce que** les composés (méth)acrylates a) comprennent des composés (méth)acrylates à fonctionnalité élevée comportant au moins 4, au moins 5 ou au moins 6 fonctions (méth)acrylates.

8. Matériau selon la revendication précédente, **caractérisé en ce que** les composés (méth)acrylates à fonctionnalité élevée ayant réagis représentent, en masse par rapport à la masse totale de la couche de protection organique, au moins 50 %.

9. Matériau selon la revendication précédente, **caractérisé en ce que** :
- les composés (méth)acrylates à fonctionnalité élevée ayant au moins 4 fonctions (méth)acrylates représentent, en masse par rapport à la masse totale de la couche de protection organique, au moins 65%, ou
- les composés (méth)acrylates à fonctionnalité élevée ayant au moins 5 fonctions (méth)acrylates représentent, en masse par rapport à la masse totale de la couche de protection organique, au moins 50 % ou
- les composés (méth)acrylates à fonctionnalité élevée ayant au moins 6 fonctions (méth)acrylates représentent, en masse par rapport à la masse totale de la couche de protection organique, au moins 50 %.

10. Matériau comprenant un substrat selon l'une quelconque des revendications précédentes, **caractérisé en ce que** le revêtement fonctionnel comprend un empilement de couches minces comportant successivement à partir du substrat une alternance de n couches métalliques fonctionnelles à base d'argent ou d'alliage métallique contenant de l'argent, et de (n+1) revêtements diélectriques, chaque revêtement diélectrique comportant au moins une couche diélectrique, de manière à ce que chaque couche métallique fonctionnelle soit disposée entre deux revêtements diélectriques.

11. Matériau comprenant un substrat selon l'une quelconque des revendications précédentes, **caractérisé en ce que** le revêtement fonctionnel comprend une couche supérieure de protection non organique choisie parmi les nitrures, oxydes ou oxy-nitrures de titane et/ou de zirconium.

12. Matériau comprenant un substrat selon l'une quelconque des revendications précédentes, **caractérisé en ce que** le revêtement fonctionnel est déposé par pulvérisation cathodique assistée par un champ magnétique et **en ce que** la couche de protection organique permanente est directement au contact du revêtement fonctionnel.

13. Vitrage comprenant un matériau selon l'une quelconque des revendications précédentes, monté sur un véhicule ou un bâtiment.

14. Vitrage selon la revendication 13, **caractérisé en ce que** le revêtement fonctionnel protégé par la couche de protection organique se trouve directement au contact de l'air ambiant.

15. Véhicule ou bâtiment comprenant un vitrage comprenant un matériau selon l'une quelconque des revendications 1 à 12.

## Patentansprüche

1. Material, umfassend ein Substrat, das mit einer Funktionsbeschichtung und einer permanenten organischen Schutzschicht beschichtet ist, die auf mindestens einem Teil der Funktionsbeschichtung abgeschieden wird,
**dadurch gekennzeichnet, dass** die organische Schutzschicht durch Vernetzen einer polymerisierbaren Zusammensetzung erhalten wird, umfassend:
a) (Meth)acrylatverbindungen, die keine Polyorganosiloxangruppe umfassen,
b) mindestens eine Verbindung, umfassend eine Polyorganosiloxangruppe und mindestens zwei (Meth)acrylatfunktionen und
c) optional einen Polymerisationsinitiator.

2. Material nach Anspruch 1, **dadurch gekennzeichnet, dass** die miteinander umgesetzten (Meth)acrylatverbindungen a), die keine Polyorganosiloxangruppe umfassen, bezogen auf das Gesamtgewicht der organischen Schutzschicht in vorzugsweise aufsteigender Reihenfolge darstellen:
- mindestens 50 Gew.-% und/oder
- höchstens 99 Gew.-%.

3. Material nach einem der vorstehenden Ansprüche,
**dadurch gekennzeichnet, dass** die Verbindung, umfassend eine Polyorganosiloxangruppe, 0,05 bis 5 Gew.-% des Gesamtgewichts der organischen Schutzschicht darstellt.

4. Material nach einem der vorstehenden Ansprüche,
**dadurch gekennzeichnet, dass** die Verbindung, umfassend eine Polyorganosiloxangruppe, ausgewählt ist aus:
- modifizierten Polyorganosiloxanen, die eine Vielzahl von (Meth)acrylatfunktionen aufweisen,
- modifizierten Poly(meth)acrylaten, die Polyorganosiloxangruppen und mindestens zwei (Meth)acrylatfunktionen aufweisen.

5. Material nach einem der vorstehenden Ansprüche,
**dadurch gekennzeichnet, dass** die miteinander umgesetzten Verbindungen a), b) und c) mindestens 80 Gew.-% der organischen Schutzschicht darstellen.

6. Material nach einem der vorstehenden Ansprüche,
**dadurch gekennzeichnet, dass** die organische Schutzschicht eine Dicke in vorzugsweise aufsteigender Reihenfolge vorweist:
- kleiner als 5 µm und/oder
- größer als 0,5 µm.

7. Material nach einem der vorstehenden Ansprüche,
**dadurch gekennzeichnet, dass** die (Meth)acrylatverbindungen a) hochfunktionelle (Meth)acrylatverbindungen umfassen, die mindestens 4, mindestens 5 oder mindestens 6 (Meth)acrylatfunktionen aufweisen.

8. Material nach dem vorstehenden Anspruch, **dadurch gekennzeichnet, dass** die umgesetzten hochfunktionellen (Meth)acrylatverbindungen bezogen auf das Gesamtgewicht der organischen Schutzschicht mindestens 50 Gew.-% darstellen.

9. Material nach dem vorstehenden Anspruch,
**dadurch gekennzeichnet, dass:**
- die hochfunktionellen (Meth)acrylatverbindungen mindestens 4 (Meth)acrylatfunktionen vorweisen, die bezogen auf das Gesamtgewicht der organischen Schutzschicht mindestens 65 Gew.-% darstellen, oder
- die hochfunktionellen (Meth)acrylatverbindungen mindestens 5 (Meth)acrylatfunktionen vorweisen, die bezogen auf das Gesamtgewicht der organischen Schutzschicht mindestens 50 Gew.-% darstellen, oder
- die hochfunktionellen (Meth)acrylatverbindungen mindestens 6 (Meth)acrylatfunktionen vorweisen, die bezogen auf das Gesamtgewicht der organischen Schutzschicht mindestens 50 Gew.-% darstellen.

10. Material, umfassend ein Substrat nach einem der vorstehenden Ansprüche, **dadurch gekennzeichnet, dass** die Funktionsbeschichtung einen Dünnschichtstapel umfasst, der von dem Substrat aufeinanderfolgend eine Abfolge von n Funktionsmetallschichten auf der Basis von Silber oder einer silberhaltigen Metalllegierung und (n+1) dielektrischen Beschichtungen aufweist, wobei jede dielektrische Beschichtung mindestens eine dielektrische Schicht aufweist, sodass jede Funktionsmetallschicht zwischen zwei dielektrischen Beschichtungen angeordnet ist.

11. Material, umfassend ein Substrat nach einem der vorstehenden Ansprüche, **dadurch gekennzeichnet, dass** die Funktionsbeschichtung eine nicht organische obere Schutzschicht umfasst, die aus Nitriden, Oxiden oder Oxynitriden von Titan und/oder Zirkonium ausgewählt ist.

12. Material, umfassend ein Substrat nach einem der vorstehenden Ansprüche, **dadurch gekennzeichnet, dass** die Funktionsbeschichtung durch Kathodenzerstäubung, unterstützt durch ein Magnetfeld, abgeschieden wird und **dadurch, dass** die permanente organische Schutzschicht mit der Funktionsbeschichtung direkt in Berührung ist.

13. Verglasung, umfassend ein Material nach einem der vorstehenden Ansprüche, die an einem Fahrzeug oder einem Gebäude angebracht ist.

14. Verglasung nach Anspruch 13, **dadurch gekennzeichnet, dass** die durch die organische Schutzschicht geschützte Funktionsbeschichtung sich mit der Umgebungsluft direkt in Berührung befindet.

15. Fahrzeug oder Gebäude, umfassend eine Verglasung, umfassend ein Material nach einem der Ansprüche 1 bis 12.

## Claims

1. A material comprising a substrate coated with a functional coating and with a permanent organic protective layer deposited on at least a part of the functional coating, **characterized in that** the organic protective layer is obtained by crosslinking a polymerizable composition comprising:
a) (meth)acrylate compounds not comprising a polyorganosiloxane group,
b) at least one compound comprising a polyorganosiloxane group and at least two (meth)acrylate functional groups and
c) optionally a polymerization initiator.

2. The material as claimed in claim 1, **characterized in that** the (meth)acrylate compounds a) not comprising a polyorganosiloxane group which have reacted with one another represent, by weight with respect to the total weight of the organic protective layer, by increasing order of preference:
- at least 50%, and/or
- at most 99%.

3. The material as claimed in either one of the preceding claims, **characterized in that** the compound comprising a polyorganosiloxane group represents from 0.05% to 5% by weight of the total weight of the organic protective layer.

4. The material as claimed in any one of the preceding claims, **characterized in that** the compound comprising a polyorganosiloxane group is chosen from:
- modified polyorganosiloxanes comprising a plurality of (meth)acrylate functional groups,
- modified poly(meth)acrylates comprising polyorganosiloxane groups and at least two (meth)acrylate functional groups.

5. The material as claimed in any one of the preceding claims, **characterized in that** the compounds a), b) and c) which have reacted with one another represent at least 80% by weight of the organic protective layer.

6. The material as claimed in any one of the preceding claims, **characterized in that** the organic protective layer has a thickness, by increasing order of preference:
- of less than 5 µm, and/or
- of greater than 0.5 µm.

7. The material as claimed in any one of the preceding claims, **characterized in that** the (meth)acrylate compounds a) comprise high functionality (meth)acrylate compounds comprising at least 4, at least 5 or at least 6 (meth)acrylate functional groups.

8. The material as claimed in the preceding claim, **characterized in that** the high functionality (meth)acrylate compounds which have reacted represent, by weight with respect to the total weight of the organic protective layer, at least 50%.

9. The material as claimed in the preceding claim, **characterized in that**:
- the high functionality (meth)acrylate compounds having at least 4 (meth)acrylate functional groups represent, by weight with respect to the total weight of the organic protective layer, at least 65%, or
- the high functionality (meth)acrylate compounds having at least 5 (meth)acrylate functional groups represent, by weight with respect to the total weight of the organic protective layer, at least 50%, or
- the high functionality (meth)acrylate compounds having at least 6 (meth)acrylate functional groups represent, by weight with respect to the total weight of the organic protective layer, at least 50%.

10. The material comprising a substrate as claimed in any one of the preceding claims, **characterized in that** the functional coating comprises a stack of thin layers successively comprising, starting from the substrate, an alternation of n functional metal layers based on silver or on silver-containing metal alloy, and of (n+1) dielectric coatings, each dielectric coating comprising at least one dielectric layer, so that each functional metal layer is positioned between two dielectric coatings.

11. The material comprising a substrate as claimed in any one of the preceding claims, **characterized in that** the functional coating comprises a nonorganic upper protective layer chosen from titanium and/or zirconium nitrides, oxides or oxynitrides.

12. The material comprising a substrate as claimed in any one of the preceding claims, **characterized in that** the functional coating is deposited by magnetic-field-assisted cathode sputtering and **in that** the permanent organic protective layer is directly in contact with the functional coating.

13. A glazing comprising a material as claimed in any one of the preceding claims, fitted to a vehicle or a building.

14. The glazing as claimed in claim 13, **characterized in that** the functional coating protected by the organic protective layer is directly in contact with ambient air.

15. A vehicle or building comprising a glazing comprising a material as claimed in any one of claims 1 to 12.
